# EUROPEAN PATENT APPLICATION

(11) **EP 4 039 443 A1**
(43) Date of publication of application: **10.08.2022**
(21) Application number: 20919124.6
(22) Date of filing: 15.10.2020
(51) Int. Cl.: B29C 45/26, B29C 44/00, B29C 44/02, B29C 44/04

(54) **MOLDED BODY, AND METHOD FOR PRODUCING MOLDED BODY**

(30) Priority: 10.02.2020 JP 2020020848
(71) Applicant: Showa Denko Materials Co., Ltd., Tokyo 100-6606 (JP)
(72) Inventor: SHIOKAWA, Hirofumi, Tagawa-shi, Fukuoka 825-0005 (JP); FUJINO, Hiroaki, Tagawa-shi, Fukuoka 825-0005 (JP); HIRAI, Yoji, Tagawa-shi, Fukuoka 825-0005 (JP)
(74) Representative: Hoffmann Eitle
(86) International application number: PCT/JP2020/038937
(87) International publication number: WO 2021/161586

(57) **Abstract**

A molded body, comprising a resin and cells, the cells having an average diameter of from 0.03 mm to 0.13 mm, and a number per unit area of the cells at a cross-section of the molded body being no less than 20 cells/mm².

## Description

### [Technical Field]

The invention relates to a molded body and a method for producing a molded body.

### [Background Art]

The material for interior and exterior components of automobiles has been changing from metal to resin in order to meet the demand of recent days for weight reduction. In particular, a molded body including air bubbles (cells), obtained by foaming a resin, is expected, as a lightweight component, to achieve further improvements in fuel economy of automobiles.

As a foamed molded body used as an interior component or the like for automobiles, for example, a product obtained by a method described in Patent Document 1 is known. In this method, the molded body is produced by injecting melted resin into a cavity formed by a pair of molds, and allowing the resin to foam.

### [Prior Art Document]

### [Patent Document]

[Patent Document 1] Japanese Patent Application Laid-Open No. 2005-238726

### [Summary of the Invention]

### [Problem to be Solved by the Invention]

From the viewpoint of weight reduction of automobiles, the proportion of cells with respect to the total volume of the molded body is preferably as large as possible. However, increasing the proportion of cells with respect to the total volume of the molded body may deteriorate an external appearance of the molded body by promoting formation of dimples at a surface thereof.

In view of the foregoing, the present invention aims to provide a molded body that can achieve both weight reduction and improved external appearance, and a method for producing the molded body.

### [Means for Solving the Problem]

The means for solving the problem include the following embodiments.
<1> A molded body, comprising a resin and cells,
   the cells having an average diameter of from 0.03 mm to 0.13 mm, and a number per unit area of the cells at a cross-section of the molded body being no less than 20 cells/mm².
<2> The molded body according to <1>, wherein the cells have a maximum diameter of no greater than 0.2 mm.
<3> The molded body according to <1> or <2>, having a region in which the cells are present and a region in which the cells are not present.
<4> The molded body according to any one of <1> to <3>, which is a component for an automobile.
<5> A method for producing the molded body according to any one of <1> to <4>, the method comprising:
   supplying a composition including a resin and a foaming agent to an internal space of a molding apparatus having a moveable portion; and
   increasing a volume of the internal space by moving the movable portion of the molding apparatus.
<6> The method for producing the molded body according to <5>, wherein the foaming agent is an organic foaming agent.

### [Effect of the Invention]

According to the present invention, a molded body that can achieve both weight reduction and improved external appearance, and a method for producing the molded body, are provided.

### [Brief Explanation of the Drawings]

Fig. 1 is a schematic sectional view of an exemplary configuration of a molding apparatus used in the present embodiment.
Fig. 2 is a schematic sectional view of an exemplary configuration of an injection apparatus used in the present embodiment.
Fig. 3 is an electron micrograph of a cross-section of a molded body according to the present embodiment.
Fig. 4 is an electron micrograph of a cross-section of a molded body that is different from the present embodiment.
Fig. 5 is an electron micrograph of a surface of a molded body according to the present embodiment.

### [Embodiments for Implementing the Invention]

Embodiments for carrying out the present invention will now be described in detail. However, the invention is in no way limited to the following embodiments.

In the following embodiments, constituent elements (including element steps and the like) of the embodiments are not essential, unless otherwise specified. Likewise, numerical values and ranges thereof are not intended to restrict the invention.

In the present disclosure, the definition of the term "step" includes not only an independent step which is distinguishable from another step, but also a step which is not clearly distinguishable from another step, as long as the purpose of the step is achieved.

In the present disclosure, any numerical range described using the expression "from ^{∗} to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, each component may include plural kinds of substances corresponding to the component. In a case in which plural kinds of substances corresponding to each component are present in a composition, the content ratio or content of each component refers to the total content ratio or content of the plural kinds of substances present in the composition, unless otherwise specified.

In the present disclosure, the term "layer" includes, when a region with a layer is viewed, a case in which a layer is formed at a portion of the region, in addition to a case in which a layer is formed at an entire region.

### <Molded body>

The molded body according to the present disclosure is a molded body, comprising a resin and cells,
the cells having an average diameter of from 0.03 mm to 0.13 mm, and
a number per unit area of the cells at a cross-section of the molded body being no less than 20 cells/mm².

The present inventors have found that a molded body in which the average diameter of cells satisfies the condition as specified above is less likely to have dimples at a surface thereof, even if a large number of cells are present in the molded body, thereby achieving a favorable external appearance. Therefore, the molded body achieves both weight reduction and improved external appearance.

In the present disclosure, the average diameter of the cells is measured by observing a cross-section of the molded body. More specifically, a diameter of a true circle having an equivalent area with a cell observed at a cross-section of the molded body (i.e., equivalent circle diameter) is determined as a diameter of the cell. Further, an arithmetic average value of the diameter of all cells observed at a cross-section of the molded body (except cells having a diameter of less than 0.03 mm) is determined as an average diameter of the cells.

In the present disclosure, the number per unit area of the cells at a cross-section is measured by observing a cross-section of the molded body. More specifically, the number of cells observed at a cross-section of the molded body is counted, and is converted to the number per unit area (1 mm²).

The cross-section of the molded body refers to a surface obtained by cutting the molded body in a direction along a thickness thereof.

The molded body may have cells at an entire region of the cross-section thereof, or may have a region in which cells are present and a region in which cells are not present. For example, the molded body may have a skin layer as a region in which cells are not present and a foamed layer as a region in which cells are present, like the case shown in the Examples.

When the cross-section of the molded body has a region in which cells are present and a region in which cells are not present, the diameter, number and area of the cells are the values obtained by observing a region of the cross-section in which cells are present.

The dimension of a cross-section of the molded body, which is used as a standard for the measurement of the average diameter and the number of cells (observed region), is determined such that the measured values are obtained in a generally constant manner.

Specifically, the dimension of the observed region in a thickness direction of a cross-section of the molded body is determined as a dimension of the entire region in which cells are present at a cross-section of the molded body. The dimension of the observed region in a thickness direction is preferably 1 mm or more, more preferably 2 mm or more.

The dimension of the observed region in a width direction (a direction perpendicular to a thickness direction) of a cross-section of the molded body is preferably equal to or greater than the dimension of the observed region in a thickness direction.

The molded body according to the present disclosure has an average diameter of the cells being from 0.03 mm to 0.13 mm. When the average diameter of the cells is 0.03 mm or more, a sufficient degree of weight reduction of the molded body can be achieved. When the average diameter of the cells is 0.13 mm or less, a favorable external appearance of the molded body can be maintained.

The average diameter of the cells may be from 0.05 mm to 0.12 mm, or may be from 0.08 mm to 0.11 mm.

The molded body according to the present disclosure has a number per unit area of the cells at a cross-section of the molded body of no less than 20 cells/mm². When the number of the cells is no less than 20 cells/mm², a sufficient degree of weight reduction of the molded body can be achieved. The number of cells may be no less than 25 cells/mm², or may be no less than 30 cells/mm².

The upper limit of the number per unit area of the cells at a cross-section of the molded body is not particularly limited. From the viewpoint of strength and external appearance of the molded body, the number per unit area of the cells may be any of no more than 100 cells/mm², no more than 80 cells/mm², or no more than 60 cells/mm².

In the molded body according to the present disclosure, the maximum diameter of the cells may be any of no greater than 0.2 mm, no greater than 0.175 mm, or no greater than 0.15 mm. When the maximum diameter of the cells is no greater than 0.2 mm, the molded body maintains a favorable external appearance. In the present disclosure, the maximum diameter of the cells refers to a maximum value of the measured diameters of the cells.

In the molded body according to the present disclosure, the area ratio of the cells may be any of from 12% to 24%, from 14% to 22%, or from 16% to 20%.

The area ratio of the cells is a value calculated by the following formula.

Total area of all cells in observed region / area of observed region × 100 (%)

The total thickness of the molded body is not particularly limited, and may be determined according to a purpose of the molded body. For example, the total thickness of the molded body may be selected from 2 mm to 5 mm, or may be selected from 3 mm to 4 mm. When the thickness of the molded body is not uniform, a minimum value thereof is defined as the thickness of the molded body as specified above.

The molded body according to the present disclosure may include a skin layer as a region in which cells are not present and a foamed layer as a region in which cells are present. For example, the molded body may have a skin layer at each side of a foamed layer, respectively.

When the molded body includes a foamed layer and a skin layer, the ratio of the thickness of the foamed layer with respect to the total thickness of the molded body may be any of 50% or more, 55% or more, or 60% or more, from the viewpoint of weight reduction of the molded body. From the viewpoint of securing the strength of the molded body, the ratio of the thickness of the foamed layer with respect to the total thickness of the molded body may be any of 95% or less, 90% or less, or 80% or less.

The kind of the resin included in the molded body is not particularly limited. From the viewpoint of ease of molding, a balance between tenacity and strength, or other properties, the resin is preferably a thermoplastic resin. The molded body may include a single kind of resin or two or more kinds thereof.

Specific examples of the resin include at least one selected from the group consisting of polyethylene resin, polypropylene resin, composite polypropylene resin, polystyrene resin, polyethylene terephthalate resin, polyvinyl alcohol resin, vinyl chloride resin, ionomer resin, polyamide resin, acrylonitrile/butadiene/styrene copolymer (ABS) resin and polycarbonate resin. Among these resins, at least one selected from the group consisting of polypropylene resin, composite polypropylene resin and acrylonitrile/butadiene/styrene copolymer (ABS) resin is preferred.

The molded body may include a component other than a resin, as necessary. Examples of the component other than a resin include an additive such as carbon black and a component derived from a foaming agent as described later. When the molded body include a component other than a resin, the total content thereof with respect to the total molded body is preferably 15% by mass or less, more preferably 10% by mass or less, further preferably 5% by mass or less.

The purpose of the molded body is not particularly limited. Since the molded body is light in weight and has excellent external appearance, the molded body is suitable for purposes that require being light in weight and excellent in external appearance, such as internal or external components for automobiles. Specific examples of the internal or external components for automobiles include Sacco moldings, arch moldings, side moldings, rocker moldings, bumpers and back door trims.

### <Method for producing molded body>

The method for producing a molded body according to the present disclosure is a method for producing the molded body as mentioned above, the method comprising:
supplying a composition including a resin and a foaming agent to an internal space of a molding apparatus having a movable portion; and
increasing a volume of the internal space by moving the movable portion of the molding apparatus.

In the present method, the volume of an internal space of a molding apparatus, in which a composition has been supplied, is increased by moving a movable portion of the molding apparatus. In this process, cells are formed by the action of a foaming agent included in the composition. As a result, a molded body including a resin with cells is produced.

In the present method, the techniques for controlling the average diameter or the number of the cells in the molded body to be within the aforementioned ranges are not particularly limited. For example, the average diameter or the number of the cells may be controlled by the type or the amount of the resin or the foaming agent included in the composition, or by the molding conditions such as the temperature of the composition and the molding apparatus or the time for molding.

The kind of the resin included in the composition is not particularly limited, and may be selected from the resins that may be included in the molded body as described above.

The kind of the foaming agent is not particularly limited, and may be either an organic foaming agent or an inorganic foaming agent.

Specific examples of the organic foaming agent include azodicarbonamide (ADCA), N,N-dintrosopentamethylenetetramine (DPT), 4,4-oxybis(benzenesulfonylhydrazide (ABSH) and hydroazodicarbonamide (HDCA). Specific examples of the inorganic foaming agent include sodium hydrogen carbonate.

Among the organic foaming agents, when the molded body is used as an exterior component, azodicarbonamide (ADCA) is preferred.

By using azodicarbonamide (ADCA), resistance to warm water or the like of the molded body is improved, and occurrence of blisters in a warm-water test tends to be suppressed. The blister refers to a state in which a skin layer is raised by a gas generated by reaction of water with an unreacted foaming agent remaining in a skin layer.

The decomposition temperature of the foaming agent is preferably from 50°C to 250°C, more preferably from 50°C to 220°C. Depending on the type of usage, the decomposition temperature of the foaming agent may be from 130°C to 250°C.

The content of the foaming agent in the composition is preferably determined depending on the type of the foaming agent or the like.

For example, when an organic foaming agent (preferably azodicarbonamide) is used as the foaming agent, the content of the organic foaming agent in the composition is preferably from 0.05% by mass to 1.0% by mass, more preferably from 0.05% by mass to 0.5% by mass, further preferably from 0.1% by mass to 0.4% by mass, from the viewpoint of foamability, moldability and coatability of the composition.

The content of the foaming agent as mentioned above is a content in a composition before being supplied to a molding apparatus.

In the present method, the temperature of the composition when it is supplied to a molding apparatus is not particularly limited. When the composition includes a thermoplastic resin, the temperature of the composition is preferably equal to or higher than a softening point of the thermoplastic resin.

The molding apparatus used in the present method is not particularly limited, as long as at least a portion thereof is movable. From the viewpoint of workability, the molding apparatus is preferably a pair of molds with at least one of them being movable.

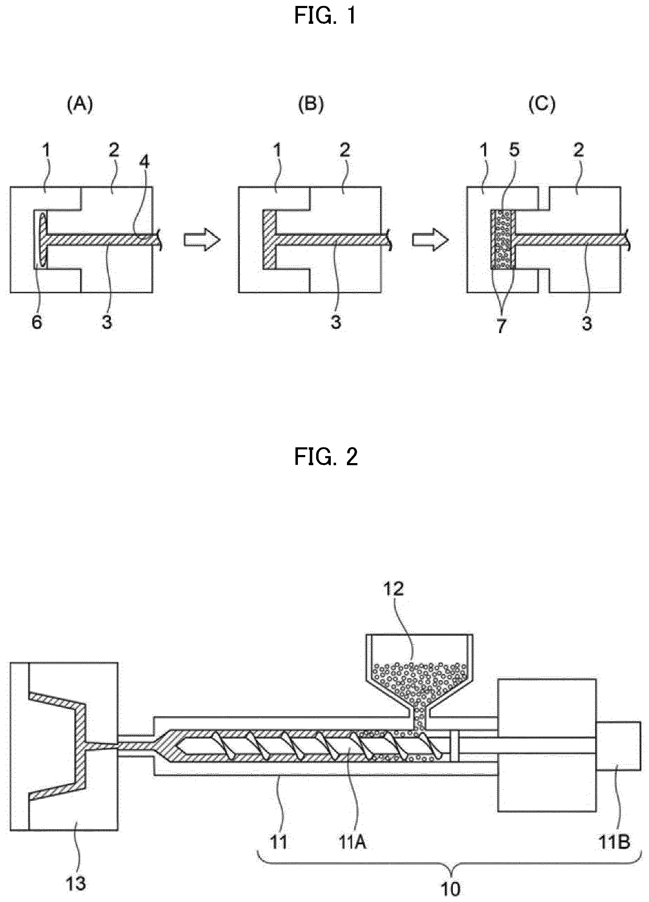

Fig. 1 shows an exemplary configuration of the molding apparatus. The molding apparatus shown in Fig. 1 has a movable mold 1; a fixed mold 2; a cavity corresponding to a space between the movable mold 1 and the fixed mold 2; and a gate 4 that penetrates the fixed mold 2 from the outside to the cavity 6. In the following, the movable mold 1 and the fixed mold 2 may be collectively referred to as a mold.

First, as shown in (A) in Fig. 1, a composition 3 including a resin and a foaming agent is supplied to the cavity 6 from an injection apparatus (not shown) through the gate 4. When the composition 3 includes a thermoplastic resin, the composition 3 is supplied to the cavity 6 while the thermoplastic resin is made flowable by melting or softening.

The mold is generally has a lower temperature than the composition 3 to be supplied. Therefore, when the composition 3 fills the cavity 6 as shown in (B) in Fig. 1, the composition 3 is caused to solidify at a portion being in contact with the mold.

Subsequently, a foamed layer 5 is formed by moving the movable mold 1 for a predetermined amount (core back) to cause a portion of the composition 3, which has not been solidified, to foam. Between the foamed layer 5 and the mold, skin layers 7 are formed from the solidified composition 3.

The material for the molding apparatus is not particularly limited, and may be selected from ordinary materials. Examples of the materials include stainless steels, pre-hardened steels, alloy tool steels, high-speed tool steels and ultra-hard tool steels.

The method for supplying the composition to the molding apparatus as shown in Fig. 1 is not particularly limited. For example, the composition may be supplied to the molding apparatus by means of an injection apparatus that prepares and supplies the composition to the molding apparatus in a continuous manner.

The injection apparatus 10 as shown in Fig. 2 has a cylinder 11 and a hopper 12 that supplies a raw material of the composition to the cylinder 11. The outlet of the cylinder 11 is connected to the mold 13 of the molding apparatus.

The cylinder 11 has a screw 11A that prepares a composition by mixing the raw material and transports the composition toward the mold 13 of the molding apparatus; a motor 11 B that drives the screw 11A; and a heater (not shown) that heats inside the cylinder 11. The raw material that has been supplied to the cylinder 11 is melted while being moved toward the mold 13.

### [Examples]

In the following, the present invention is explained in detail by referring to the Examples. However, the present invention is not limited to the Examples.

### <Example 1>

A resin (100 parts by mass), a foaming agent (1 parts by mass) and an additive (3 parts by mass) were supplied to a hopper of an injection apparatus having a configuration as shown in Fig. 2. Inside the cylinder, the materials were mixed while melting the resin to prepare a composition. The composition was supplied to a cavity formed by a pair of molds with one of them being movable. After supplying the composition to the cavity, the composition was caused to foam by moving the movable mold (core back), thereby obtaining a molded body.

Details of the materials used for the preparation of the composition are as follows.
Resin: polypropylene
Foaming agent: masterbatch including azodicarbonamide (ADCA)
Additive: masterbatch including black pigment

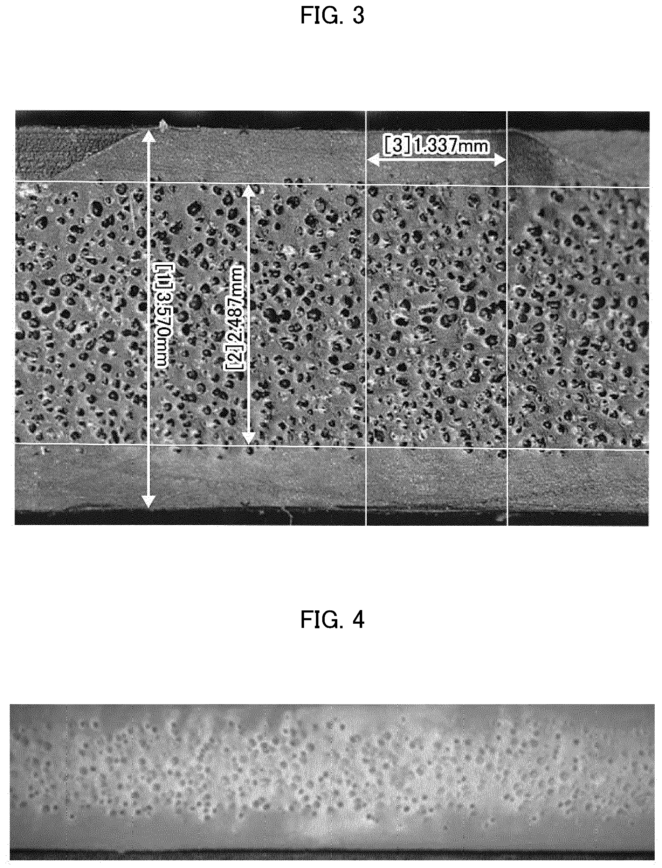

The molded body was cut along a thickness direction and a cross-section was observed with an electron microscope. As shown in Fig. 3, the cross-section was formed of three layers consisting of skin layer/foamed layer/skin layer (3.57 mm in total thickness).

The average diameter, maximum diameter, number per unit area, and area ratio of the cells in a region corresponding to the foamed layer in the electron micrograph were measured with a microscope, respectively. The results are shown in Table 1.

### <Comparative Example 1>

A molded body produced by another company was cut along a thickness direction and a cross-section was observed with an electron microscope. As shown in Fig. 4, the cross-section of the molded body was formed of three layers consisting of skin layer/foamed layer/skin layer.

The average diameter, maximum diameter, number per unit area, and area ratio of the cells in a region corresponding to the foamed layer in the electron micrograph were measured with a microscope, respectively. The results are shown in Table 1.

### <Evaluation of external appearance>

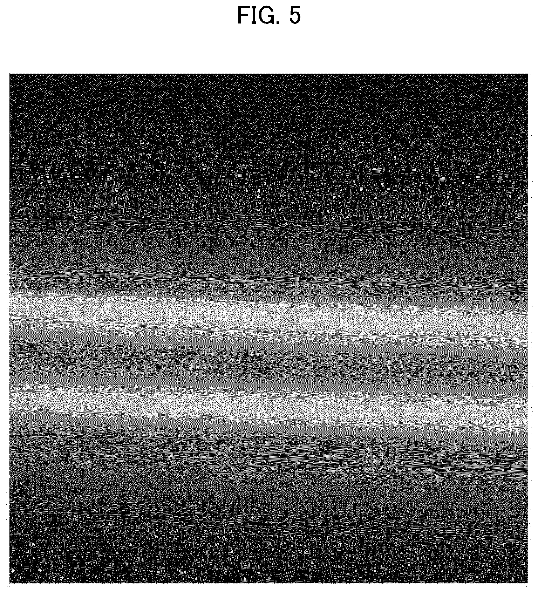

The electron micrograph of a surface of the molded body prepared in Example 1 is shown in Fig. 5. As shown in Fig. 5, almost no dimples were observed at a surface of the molded body.

Further, there was no change in the external appearance of the molded body prepared in Example 1 even after being immersed in warm water (40°C) for 10 days, and favorable external appearance was maintained.

**Table 1**

| Items | Unit | Example 1 | Example 2 |
|---|---|---|---|
| Thickness of molded body | mm | 3.57 | 3.06 |
| Thickness of foamed layer (thickness of observed region) | mm | 2.49 | 1.96 |
| Width of observed region | mm | 3.3 | 2.96 |
| Average diameter of cells | mm | 0.08 | 0.15 |
| Maximum diameter of cells | mm | 0.13 | 0.21 |
| Number per unit area of cells | cells/mm² | 47 | 13 |
| Area ratio of cells | % | 16 | 14 |

The disclosure of Japanese Patent Application No. 2020-020848 is incorporated herein by reference in its entirety.

All publications, patent applications, and technical standards mentioned in the present specification are incorporated herein by reference to the same extent as if each individual publication, patent application, or technical standard was specifically and individually indicated to be incorporated by reference.

## Claims

1. A molded body, comprising a resin and cells,
the cells having an average diameter of from 0.03 mm to 0.13 mm, and a number per unit area of the cells at a cross-section of the molded body being no less than 20 cells/mm².

2. The molded body according to claim 1, wherein the cells have a maximum diameter of no greater than 0.2 mm.

3. The molded body according to claim 1 or claim 2, having a region in which the cells are present and a region in which the cells are not present.

4. The molded body according to any one of claim 1 to claim 3, which is a component for an automobile.

5. A method for producing the molded body according to any one of claim 1 to claim 4, the method comprising:
supplying a composition including a resin and a foaming agent to an internal space of a molding apparatus having a moveable portion; and
increasing a volume of the internal space by moving the movable portion of the molding apparatus.

6. The method for producing the molded body according to claim 5, wherein the foaming agent is an organic foaming agent.
